# EUROPEAN PATENT APPLICATION

(11) **EP 4 358 238 A1**
(43) Date of publication of application: **24.04.2024**
(21) Application number: 23198216.6
(22) Date of filing: 19.09.2023
(51) Int. Cl.: H01M 10/647, H01M 10/6557, H01M 50/291

(54) **BATTERY MODULE**

(30) Priority: 20.10.2022 JP 2022168081
(71) Applicant: Prime Planet Energy & Solutions, Inc., Chuo-ku Tokyo 103-0022 (JP)
(72) Inventor: KURIHARA, Ken, Tokyo, 103-0022 (JP); YONEDA, Koshiro, Tokyo, 103-0022 (JP); ABE, Kosyo, Tokyo, 103-0022 (JP); TAKEDA, Takahide, Tokyo, 103-0022 (JP)
(74) Representative: Kuhnen & Wacker Patent- und Rechtsanwaltsbüro PartG mbB

(57) **Abstract**

A partition wall member (190) includes a main body portion (191) and a plurality of protrusions (192). The plurality of protrusions (192) protrude from the main body portion (191) toward at least one battery cell (100) of the plurality of battery cells (100). Each of the plurality of protrusions (192) has a first end portion (193), a second end portion (194), and an intermediate portion (195). The first end portion (193) and the second end portion (194) face each other in a second direction orthogonal to the first direction. The intermediate portion (195) is located between the first end portion (193) and the second end portion (194). A cooling medium path (11) along the second direction is formed between the plurality of protrusions (192). When viewed in the second direction, a cross sectional area of the cooling medium path (11) is decreased from the first end portion (193) toward the intermediate portion (195) and is increased from the intermediate portion (195) toward the second end portion (194).

## Description

### CROSS REFERENCE TO RELATED APPLICATIONS

This nonprovisional application is based on Japanese Patent Application No. 2022-168081 filed on October 20, 2022 with the Japan Patent Office, the entire contents of which are hereby incorporated by reference.

### BACKGROUND OF THE INVENTION

### Field of the Invention

The present technology relates to a battery module.

### Description of the Background Art

Japanese Patent Laying-Open No. 2018-6058 is a prior art document that discloses a configuration of a battery module. In the battery module described in Japanese Patent Laying-Open No. 2018-6058, a plurality of battery cells and a plurality of resin frames are alternately stacked in a thickness direction. Each of the resin frames has a base portion and a plurality of ribs extending from the base portion and in abutment with a surface of a battery cell. Since each of the ribs has a trapezoidal cross sectional shape that becomes wider toward a base end thereof in the thickness direction, creep deformation of the rib is less likely to occur.

Japanese Patent Laying-Open No. 2011-76967 is a prior art document that discloses a configuration of a battery assembly. The battery assembly described in Japanese Patent Laying-Open No. 2011-76967 includes: a plurality of separators disposed between a plurality of unit cells; and a cooling air introduction duct. Each of the plurality of separators has a flow path for cooling air. The flow path extends perpendicularly to a cooling air flow direction of the cooling air introduction duct.

The width of the flow path is continuously decreased from the upstream side toward the downstream side in the cooling air flow direction in the cooling air introduction duct. Thus, the cooling air flows uniformly for each flow path, thereby suppressing variation in cooling each unit cell.

### SUMMARY OF THE INVENTION

Generally, when a battery module is driven, the temperature of a central portion of a battery cell becomes high. In each of the battery module disclosed in Japanese Patent Laying-Open No. 2018-6058 and the battery assembly disclosed in Japanese Patent Laying-Open No. 2011-76967, the central portion of the battery cell cannot be efficiently cooled.

The present technology has been made to solve the above-described problem and has an object to provide a battery module to efficiently cool a central portion of a battery cell.

The present technology provides the following battery module.
[1] A battery module comprising:
   a plurality of battery cells arranged side by side in a first direction, each of the plurality of battery cells having a prismatic shape; and
   a partition wall member provided between the plurality of battery cells and having an insulating property, wherein
   the partition wall member includes a main body portion and a plurality of protrusions protruding from the main body portion toward at least one battery cell of the plurality of battery cells,
   each of the plurality of protrusions has
      a first end portion and a second end portion facing each other in a second direction orthogonal to the first direction, and
      an intermediate portion located between the first end portion and the second end portion,
   a cooling medium path along the second direction is formed between the plurality of protrusions, and
   when viewed in the second direction, a cross sectional area of the cooling medium path is decreased from the first end portion toward the intermediate portion and is increased from the intermediate portion toward the second end portion.
[2] The battery module according to [1], wherein a width of the cooling medium path in a third direction orthogonal to the first direction and the second direction is narrowed in a tapered form from the first end portion toward the intermediate portion and is widened in a tapered form from the intermediate portion toward the second end portion.
[3] The battery module according to [2], wherein the width of the cooling medium path in the third direction has a taper angle of 0.5° or more.
[4] The battery module according to any one of [1] to [3], wherein a width of the cooling medium path in the first direction is narrowed in a tapered form from the first end portion toward the intermediate portion and is widened in a tapered form from the intermediate portion toward the second end portion.
[5] The battery module according to [4], wherein the width of the cooling medium path in the first direction has a taper angle of more than 0.2° and less than 0.5°.
[6] The battery module according to any one of [1] to [5], wherein the partition wall member is formed in a case that accommodates the plurality of battery cells, that supports the plurality of battery cells in at least the first direction, and that forms a unit including the plurality of battery cells.
[7] The battery module according to any one of [1] to [6], wherein the plurality of protrusions are formed in one piece with the partition wall member.
[8] The battery module according to any one of [1] to [7], wherein a cooling medium flowing through the cooling medium path is air.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a battery module according to one embodiment of the present technology.
Fig. 2 is a perspective view showing an internal configuration of the battery module according to the embodiment of the present technology.
Fig. 3 is a perspective view showing a configuration of a unit included in the battery module according to the embodiment of the present technology.
Fig. 4 is a perspective view showing a configuration of a battery cell included in the battery module according to the embodiment of the present technology.
Fig. 5 is a side view showing a configuration of a cooling medium path included in the battery module according to the embodiment of the present technology.
Fig. 6 is a schematic view showing a change in cross sectional area of the cooling medium path in a partition wall member.
Fig. 7 is a cross sectional view of the battery module of Fig. 5 when viewed in a direction of line with arrows VII-VII.
Fig. 8 is a cross sectional view of the unit of the battery module of Fig. 5 when viewed in a direction of line with arrows VIII-VIII.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the term "electrode" may collectively represent a positive electrode and a negative electrode.

Further, the "battery module" can be mounted on vehicles such as a hybrid electric vehicle (HEV), a plug-in hybrid electric vehicle (PHEV), and a battery electric vehicle (BEV). It should be noted that the use of the "battery module" is not limited to the use in a vehicle.

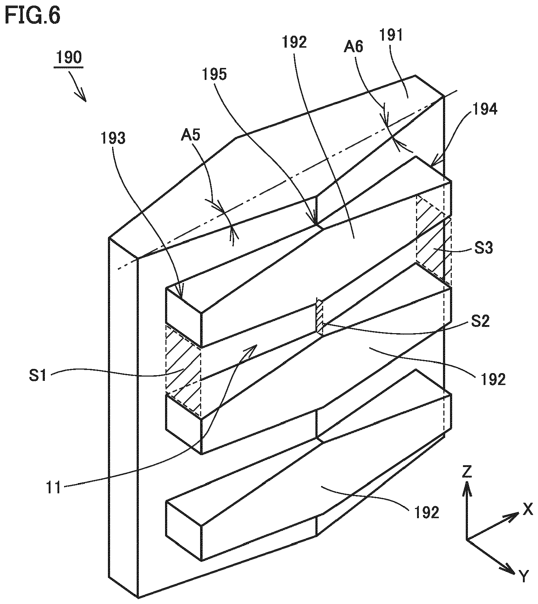

It should be noted that in each of the figures, an X direction serving as a second direction is defined as a direction in which a positive electrode terminal and a negative electrode terminal of a battery cell are arranged, a Y direction serving as a first direction is defined as a direction in which a plurality of battery cells are stacked, and a Z direction serving as a third direction is defined as a height direction of the battery module. Further, in each of Figs. 6 to 8, constituent members in the battery module are shown to be changed in dimensional scales in order to facilitate understanding of the invention.

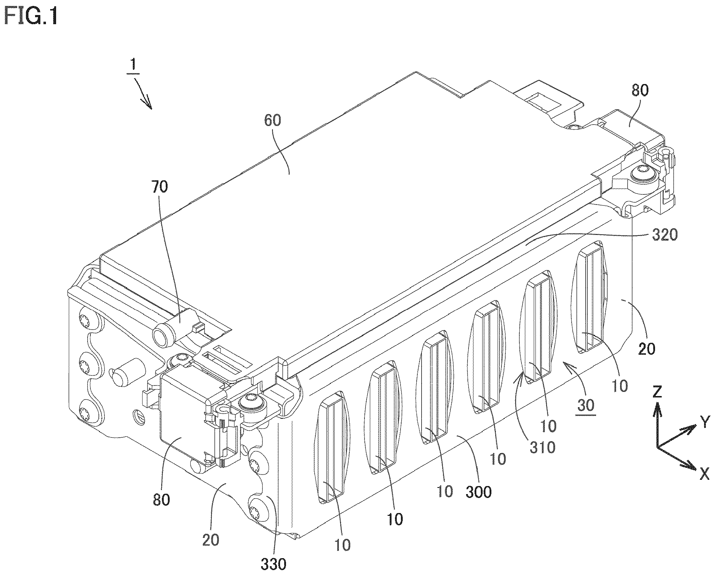

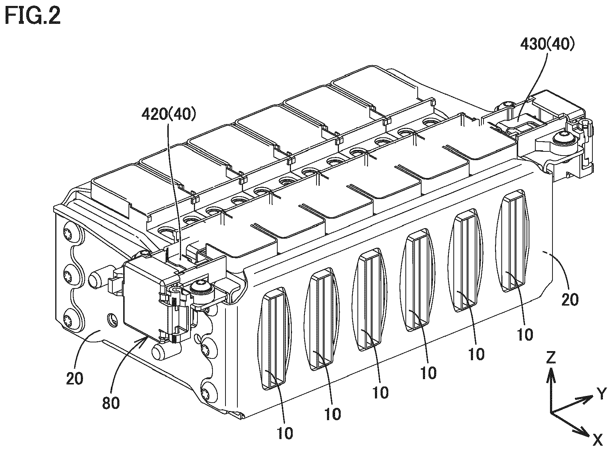

Fig. 1 is a perspective view showing a configuration of a battery module according to one embodiment of the present technology. Fig. 2 is a perspective view showing an internal configuration of the battery module according to the embodiment of the present technology.

First, an overall structure of a battery module 1 will be described. As shown in Figs. 1 and 2, battery module 1 includes a plurality of units 10, end plates 20, restraint members 30, a bus bar 40, a cover member 60, a gas duct 70, and terminal members 80.

The plurality of units 10 are arranged side by side in the first direction (Y direction). Six units 10 are arranged side by side in the Y direction as the plurality of units 10 according to the present embodiment. It should be noted that the number of the plurality of units 10 is not particularly limited as long as two or more units 10 are included.

The plurality of units 10 are sandwiched between two end plates 20. The plurality of units 10 according to the present embodiment are pressed by end plates 20 and restrained between two end plates 20.

End plates 20 are provided at the both ends beside the plurality of units 10 in the Y direction. Each of end plates 20 is fixed to a base such as a pack case that accommodates battery module 1. End plate 20 is composed of, for example, aluminum or iron.

Restraint members 30 are provided on both sides beside the plurality of units 10 and end plates 20 in the X direction. When restraint members 30 are engaged with end plates 20 with compressive force in the Y direction being applied to the plurality of units 10 arranged side by side and to end plates 20 and then the compressive force is released, tensile force acts on restraint members 30 that connect two end plates 20. As a reaction thereto, restraint member 30 presses two end plates 20 in directions of bringing them closer to each other. As a result, restraint members 30 restrain the plurality of units 10 in the first direction (the Y direction).

Each of restraint members 30 includes a plate-shaped portion 300, a first flange portion 320, and second flange portions 330. Restraint member 30 is composed of iron, for example.

Plate-shaped portion 300 is a member extending in the Y direction. Plate-shaped portion 300 is provided with a plurality of openings 310. The plurality of openings 310 are provided at intervals in the Y direction. Each of openings 310 is constituted of a through hole extending through plate-shaped portion 300 in the X direction.

First flange portion 320 extends from beside the side surfaces of the plurality of units 10 so as to be located over the upper surfaces of the plurality of units 10. By providing first flange portion 320, rigidity of restraint member 30 formed to be relatively thin can be secured.

Second flange portions 330 are connected to both ends of plate-shaped portion 300 in the Y direction. Second flange portions 330 are fixed to end plates 20. Each of second flange portions 330 is fixed to end plate 20 by a known fixing method such as bolt fastening, for example. Thus, restraint members 30 connect two end plates 20 to each other.

Bus bar 40 is composed of an electric conductor. Bus bar 40 includes a first bus bar portion (not shown), a second bus bar portion 420, and a third bus bar portion 430.

The first bus bar portion (not shown) electrically connects a plurality of battery cells in unit 10 to each other. Second bus bar portion 420 electrically connects a battery cell disposed at one end in the Y direction to positive-side terminal member 80. Third bus bar portion 430 electrically connects a battery cell disposed at the other end in the Y direction to negative-side terminal member 80.

As shown in Fig. 1, cover member 60 is located above units 10 and covers an electric conductor such as bus bar 40. Gas duct 70 extends in the Y direction. Gas duct 70 is disposed between each of the plurality of units 10 and cover member 60 in the Z direction.

Terminal members 80 are arranged on both sides beside the plurality of units 10 arranged side by side in the Y direction. Each of terminal members 80 connects battery module 1 to an external wiring such as a cable (not shown) disposed outside battery module 1.

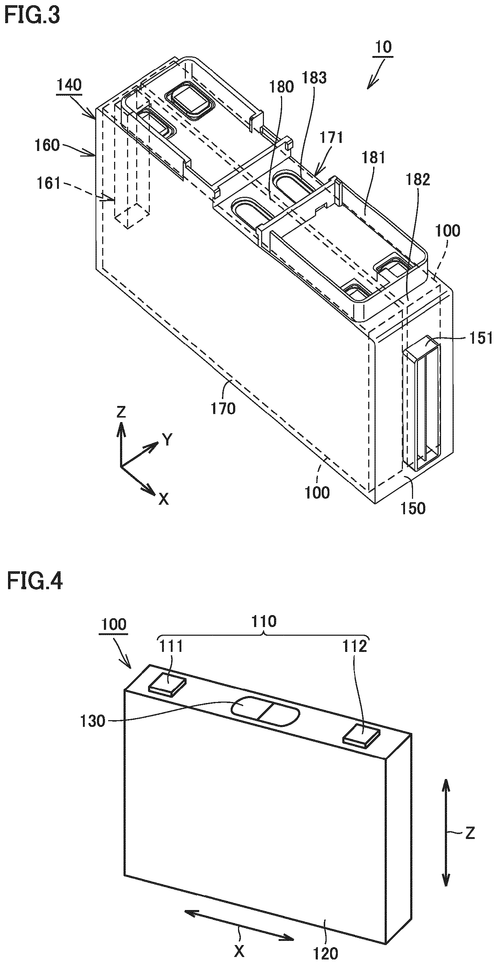

Next, a structure of each unit 10 will be described. Fig. 3 is a perspective view showing a configuration of each unit included in the battery module according to the embodiment of the present technology.

As shown in Fig. 3, each of the plurality of units 10 includes a plurality of battery cells 100 and a case 140.

Unit 10 includes two or more battery cells 100. Unit 10 according to the embodiment of the present technology includes two battery cells 100 as an even number of battery cells 100. It should be noted that the number of battery cells 100 included in each of the plurality of units 10 is not particularly limited as long as two or more battery cells 100 are included. Moreover, an odd number of battery cells 100 may be included in each of the plurality of units 10.

The plurality of battery cells 100 are arranged side by side in the first direction (Y direction). Two battery cells 100 are arranged side by side in the Y direction as the plurality of battery cells 100 according to the embodiment of the present technology. The arrangement direction of the plurality of units 10 is the same as the arrangement direction of the plurality of battery cells 100 in each of the plurality of units 10.

Case 140 has an external appearance with a rectangular parallelepiped shape. Case 140 accommodates the plurality of battery cells 100 and supports the plurality of battery cells 100 at least in the first direction (Y direction). Case 140 is composed of, for example, a resin such as polypropylene. Case 140 is compressed in the first direction (Y direction) by end plates 20 and restraint members 30.

As shown in Fig. 3, case 140 has a front wall portion 150, a rear wall portion 160, a first side wall portion 170, a second side wall portion 171, and an upper surface portion 180.

Front wall portion 150 is a surface adjacent to one restraint member 30. Front wall portion 150 is provided with a first duct portion 151. First duct portion 151 protrudes from front wall portion 150 toward the one restraint member 30 side. First duct portion 151 is provided to extend through front wall portion 150 in the X direction.

Rear wall portion 160 is a surface facing front wall portion 150 with the plurality of battery cells 100 being interposed therebetween in the X direction. Rear wall portion 160 is provided with a second duct portion 161. Second duct portion 161 protrudes from rear wall portion 160 toward the other restraint member 30 side. Second duct portion 161 is provided to extend through rear wall portion 160 in the X direction. Second duct portion 161 communicates with first duct portion 151 through a cooling medium path described later.

First side wall portion 170 and second side wall portion 171 are arranged side by side in the first direction (Y direction), and face each other.

Upper surface portion 180 includes a plurality of wall portions 181, engagement surfaces 182, and hole portions 183. The plurality of wall portions 181 are provided to extend upward in the Z direction. The plurality of wall portions 181 define an installation location of bus bar 40. First flange portion 320 of restraint member 30 is engaged with each engagement surface 182. Each hole portion 183 communicates with a gas-discharge valve 130 described later.

Fig. 4 is a perspective view showing a configuration of each battery cell included in the battery module according to the embodiment of the present technology.

As shown in Fig. 4, battery cell 100 is, for example, a lithium ion battery. Battery cell 100 has a prismatic shape. Battery cell 100 has an output density of, for example, about 8000 W/L or more. Battery cell 100 has a voltage of, for example, about 1.0 V or more.

Battery cell 100 according to the present embodiment has electrode terminals 110, a housing 120, and gas-discharge valve 130.

Electrode terminals 110 are formed on housing 120. Electrode terminals 110 have a positive electrode terminal 111 and a negative electrode terminal 112 as two electrode terminals 110 arranged side by side along the second direction (the X direction) orthogonal to the first direction (the Y direction).

Positive electrode terminal 111 and negative electrode terminal 112 are provided to be separated from each other in the X direction. Positive electrode terminal 111 and negative electrode terminal 112 are provided on both sides beside gas duct 70 in the X direction.

Housing 120 has a rectangular parallelepiped shape, and forms the external appearance of battery cell 100. An electrode assembly (not shown) and an electrolyte solution (not shown) are accommodated in housing 120.

Gas-discharge valve 130 is provided in the upper surface portion of housing 120. When internal pressure of housing 120 becomes more than or equal to a predetermined value due to gas generated inside housing 120, gas-discharge valve 130 discharges the gas to the outside of housing 120. The gas from gas-discharge valve 130 flows through gas duct 70 and is discharged to the outside of battery module 1.

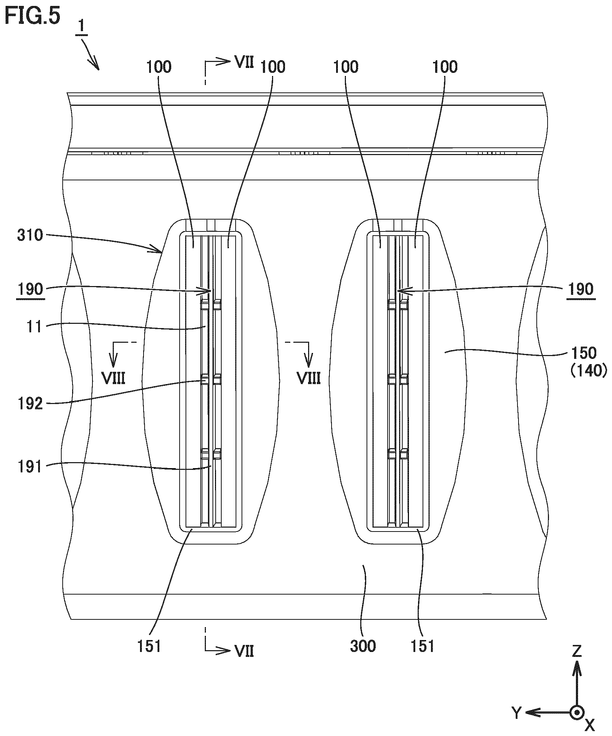

Fig. 5 is a side view showing a configuration of the cooling medium path included in the battery module according to the embodiment of the present technology.

As shown in Fig. 5, partition wall members 190 are formed inside case 140. Each of partition wall members 190 has an insulating property. Partition wall member 190 is provided between the plurality of battery cells 100 in the Y direction.

Partition wall member 190 includes a main body portion 191 and a plurality of protrusions 192. Main body portion 191 extends in the Z direction between the plurality of battery cells 100.

The plurality of protrusions 192 protrudes from main body portion 191 toward at least one battery cell 100 of the plurality of battery cells 100. The plurality of protrusions 192 in the present embodiment protrude toward two battery cells 100, between which the plurality of protrusions 192 are sandwiched, of the plurality of battery cells 100. The plurality of protrusions 192 are in abutment with two battery cells 100. The plurality of protrusions 192 are formed in one piece with main body portion 191 of partition wall member 190.

A cooling medium path 11 along the second direction (X direction) is formed between the plurality of protrusions 192. A cooling medium flowing through cooling medium path 11 is, for example, air.

Cooling medium path 11 communicates with first duct portion 151 and second duct portion 161 in the X direction. The cooling medium flows to cooling medium path 11 through first duct portion 151 or second duct portion 161, thereby cooling battery cells 100.

Fig. 6 is a schematic view showing a change in cross sectional area of the cooling medium path in the partition wall member. As shown in Fig. 6, each of the plurality of protrusions 192 in partition wall member 190 has a first end portion 193, a second end portion 194, and an intermediate portion 195. First end portion 193 and second end portion 194 face each other in the second direction (X direction). Intermediate portion 195 is located between first end portion 193 and second end portion 194. Intermediate portion 195 is located at the center of battery cell 100 in the X direction.

When viewed in the second direction (X direction), the cross sectional area of cooling medium path 11 is decreased from first end portion 193 toward intermediate portion 195 and is increased from intermediate portion 195 toward second end portion 194. Thus, each of a cross sectional area S1 of cooling medium path 11 at first end portion 193 and a cross sectional area S3 thereof at second end portion 194 is larger than a cross sectional area S2 of cooling medium path 11 at intermediate portion 195. The above-described change in cross sectional area is caused by main body portion 191 and the plurality of protrusions 192 being inclined with respect to a flow direction of cooling medium path 11.

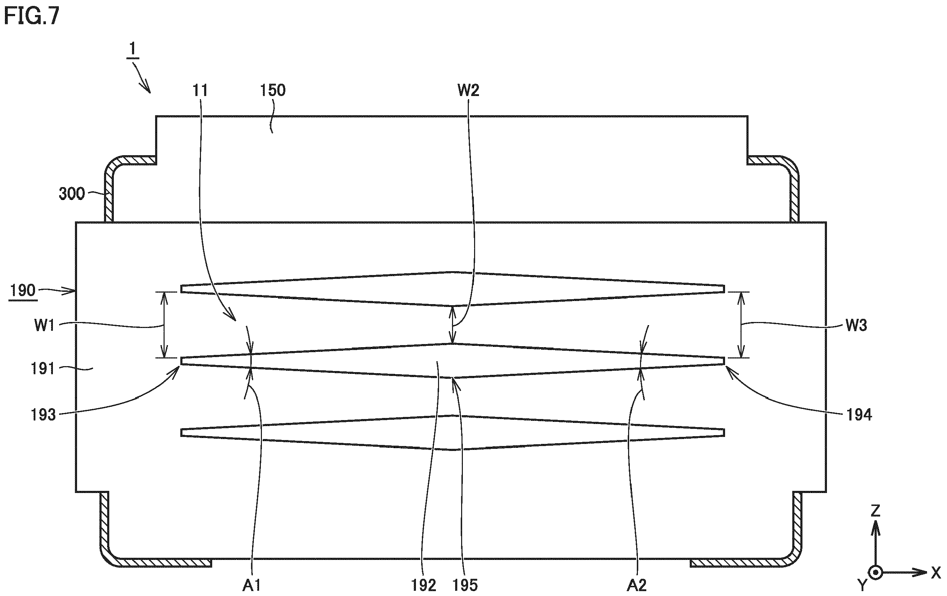

Fig. 7 is a cross sectional view of the battery module of Fig. 5 when viewed in a direction of line with arrows VII-VII. As shown in Fig. 7, the width of cooling medium path 11 in the third direction (Z direction) is narrowed in a tapered form from first end portion 193 toward intermediate portion 195, and is widened in a tapered form from intermediate portion 195 toward second end portion 194.

A width W1 of cooling medium path 11 at first end portion 193 is, for example, 10.89 mm. A width W2 of cooling medium path 11 at intermediate portion 195 is, for example, 10.46 mm. A width W3 of cooling medium path 11 at second end portion 194 is, for example, 10.89 mm.

The width of cooling medium path 11 in the third direction (Z direction) has taper angles A1 and A2 that are each 0.5° or more. When partition wall member 190 including the plurality of protrusions 192 is manufactured by resin molding using a mold, the mold may be moved along the X direction. In this case, by taking a taper for pulling out the mold into consideration, the mold can be readily pulled out from the partition wall member 190 obtained by the resin molding. In the present embodiment, when each of taper angles A1 and A2 is 0.5° or more, the mold is readily pulled out from partition wall member 190. It should be noted that the upper limit of each of taper angles A1 and A2 is not limited and may be set within a range in which cooling medium path 11 is formed to extend from first end portion 193 to second end portion 194.

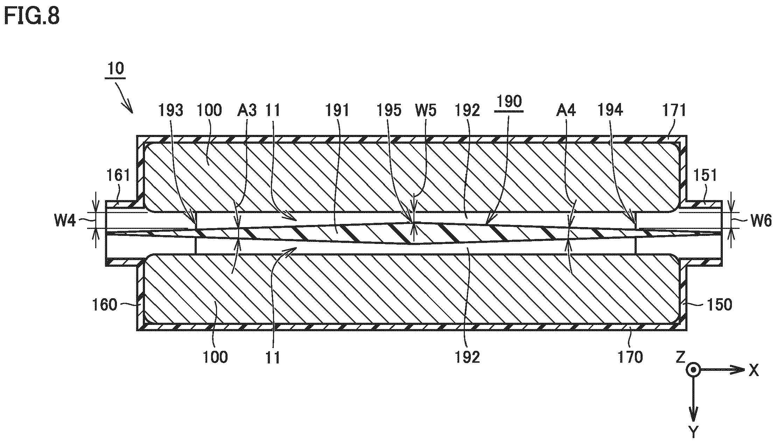

Fig. 8 is a cross sectional view of each unit of the battery module of Fig. 5 when viewed in a direction of line with arrows VIII-VIII.

As shown in Fig. 8, the width of cooling medium path 11 in the first direction (Y direction) is narrowed in a tapered form from first end portion 193 toward intermediate portion 195, and is widened in a tapered form from intermediate portion 195 toward second end portion 194.

A width W4 of cooling medium path 11 at first end portion 193 is, for example, 1.32 mm. A width W5 of cooling medium path 11 at intermediate portion 195 is, for example, 1.19 mm. A width W6 of cooling medium path 11 at second end portion 194 is, for example, 1.32 mm.

The width of cooling medium path 11 in the first direction (Y direction) has taper angles A3 and A4 that are each more than 0.2° and less than 0.5°. When partition wall member 190 is manufactured by resin molding, the mold may be moved along the X direction. In this case, by taking a taper for pulling out the mold into consideration, the mold can be readily pulled out from partition wall member 190 obtained by the resin molding while suppressing occurrence of burr.

When taper angles A3 and A4 are expressed by slope angles, slope angles A5 and A6 are defined with respect to the X direction as shown in Fig. 6. Slope angles A5 and A6 are each more than 0.1° and less than 0.25°.

Generally, v=Q/S is established, where v represents a flow velocity of the cooling medium in cooling medium path 11, Q represents a flow rate of the cooling medium, and S represents the cross sectional area of cooling medium path 11. Therefore, flow velocity v of the cooling medium can become faster by decreasing cross sectional area S of cooling medium path 11 with flow rate Q being unchanged.

Since cooling medium path 11 according to the present embodiment has a continuous path configuration, the flow rate of the cooling medium is unchanged. Therefore, by decreasing the cross sectional area of cooling medium path 11 from first end portion 193 toward intermediate portion 195 and increasing the cross sectional area of cooling medium path 11 from intermediate portion 195 toward second end portion 194, the flow velocity of the cooling medium can be increased at intermediate portion 195. As a result, the flow velocity of the cooling medium is increased in the vicinity of the central portion of battery cell 100 close to intermediate portion 195, with the result that heat can be efficiently exchanged between the cooling medium and the central portion of battery cell 100 at which the temperature of battery cell 100 is likely to be increased. Thus, the central portion of battery cell 100 can be efficiently cooled.

In battery module 1 according to the embodiment of the present technology, the flow velocity of the cooling medium at intermediate portion 195 can be increased by decreasing the cross sectional area of cooling medium path 11 from first end portion 193 toward intermediate portion 195 and increasing the cross sectional area of cooling medium path 11 from intermediate portion 195 toward second end portion 194. Thus, heat exchange between battery cell 100 and the cooling medium can be promoted at intermediate portion 195 located in the vicinity of the central portion of battery cell 100 as compared with first end portion 193 and second end portion 194, thereby efficiently cooling the central portion of battery cell 100 at which the temperature of battery cell 100 is likely to be increased.

In battery module 1 according to the embodiment of the present technology, the cross sectional area of the flow path can be changed by narrowing the width of cooling medium path 11 in the third direction (Z direction) from first end portion 193 toward intermediate portion 195 and widening the width of cooling medium path 11 from intermediate portion 195 toward second end portion 194. As a result, the flow velocity of the cooling medium can be increased in the vicinity of the central portion of battery cell 100, thereby efficiently cooling the central portion of battery cell 100 at which the temperature of battery cell 100 is likely to be increased.

In battery module 1 according to the embodiment of the present technology, by setting the taper angle of cooling medium path 11 in the third direction (Z direction) to 0.5° or more, the mold used when manufacturing partition wall member 190 through the resin molding can be readily removed from partition wall member 190 after the manufacturing, with the result that cooling medium path 11 can be readily formed while securing the cross sectional area of cooling medium path 11.

In battery module 1 according to the embodiment of the present technology, the cross sectional area of cooling medium path 11 can be changed by narrowing the width of cooling medium path 11 in the first direction (Y direction) from first end portion 193 toward intermediate portion 195 and widening the width of cooling medium path 11 from intermediate portion 195 toward second end portion 194. As a result, the flow velocity of the cooling medium can be increased in the vicinity of the central portion of battery cell 100, thereby efficiently cooling the central portion of battery cell 100 at which the temperature of battery cell 100 is likely to be increased.

In battery module 1 according to the embodiment of the present technology, by setting the taper angle of cooling medium path 11 in the first direction (Y direction) to be more than 0.10° and less than 0.25°, the mold used when manufacturing partition wall member 190 through the resin molding can be readily removed from partition wall member 190 after the manufacturing to suppress occurrence of burr, with the result that cooling medium path 11 can be readily formed while securing the cross sectional area of cooling medium path 11.

In battery module 1 according to the embodiment of the present technology, even when case 140 that accommodates the plurality of battery cells 100 is used, the configuration of efficiently cooling the central portion of each battery cell 100 at which the temperature of battery cell 100 is likely to be increased can be applied by providing partition wall member 190 inside case 140.

In battery module 1 according to the embodiment of the present technology, cooling medium path 11 can be efficiently manufactured by forming the plurality of protrusions 192 and partition wall member 190 in one piece.

In battery module 1 according to the embodiment of the present technology, since air is employed as the cooling medium flowing through cooling medium path 11, no cooling pipe or the like is required to cool battery cell 100 as compared with a case where a liquid cooling medium such as cooling water is employed.

It should be noted that in the embodiment of the present technology, the width of cooling medium path 11 in the first direction (Y direction) and the width of cooling medium path 11 in the third direction (Z direction) are both changed; however, it is not limited to this. The width of cooling medium path 11 only in one of the first direction (Y direction) and the third direction (Z direction) may be changed.

Further, in the embodiment of the present technology, the cross sectional area of cooling medium path 11 at first end portion 193 and the cross sectional area of cooling medium path 11 at second end portion 194 are the same; however, it is not limited thereto. The cross sectional area of cooling medium path 11 at the position of first end portion 193 and the cross sectional area of cooling medium path 11 at the position of second end portion 194 may be different from each other.

Although the embodiments of the present invention have been described and illustrated in detail, it is clearly understood that the same is by way of illustration and example only and is not to be taken by way of limitation, the scope of the present invention being interpreted by the terms of the appended claims. The scope of the present invention is defined by the terms of the claims, and is intended to include any modifications within the scope and meaning equivalent to the terms of the claims.

## Claims

1. A battery module comprising:
a plurality of battery cells (100) arranged side by side in a first direction, each of the plurality of battery cells (100) having a prismatic shape; and
a partition wall member (190) provided between the plurality of battery cells (100) and having an insulating property, wherein
the partition wall member (190) includes a main body portion (191) and a plurality of protrusions (192) protruding from the main body portion (191) toward at least one battery cell (100) of the plurality of battery cells (100),
each of the plurality of protrusions (192) has
a first end portion (193) and a second end portion (194) facing each other in a second direction orthogonal to the first direction, and
an intermediate portion (195) located between the first end portion (193) and the second end portion (194),
a cooling medium path (11) along the second direction is formed between the plurality of protrusions (192), and
when viewed in the second direction, a cross sectional area of the cooling medium path (11) is decreased from the first end portion (193) toward the intermediate portion (195) and is increased from the intermediate portion (195) toward the second end portion (194).

2. The battery module according to claim 1, wherein a width of the cooling medium path (11) in a third direction orthogonal to the first direction and the second direction is narrowed in a tapered form from the first end portion (193) toward the intermediate portion (195) and is widened in a tapered form from the intermediate portion (195) toward the second end portion (194).

3. The battery module according to claim 2, wherein the width of the cooling medium path (11) in the third direction has a taper angle of 0.5° or more.

4. The battery module according to any one of claims 1 to 3, wherein a width of the cooling medium path (11) in the first direction is narrowed in a tapered form from the first end portion (193) toward the intermediate portion (195) and is widened in a tapered form from the intermediate portion (195) toward the second end portion (194).

5. The battery module according to claim 4, wherein the width of the cooling medium path (11) in the first direction has a taper angle of more than 0.2° and less than 0.5°.

6. The battery module according to claim 1 or 2, wherein the partition wall member (190) is formed in a case (140) that accommodates the plurality of battery cells (100), that supports the plurality of battery cells (100) in at least the first direction, and that forms a unit (10) including the plurality of battery cells (100).

7. The battery module according to claim 1 or 2, wherein the plurality of protrusions (192) are formed in one piece with the partition wall member (190).

8. The battery module according to claim 1 or 2, wherein a cooling medium flowing through the cooling medium path (11) is air.
